# EUROPÄISCHE PATENTSCHRIFT

(11) **EP 3 971 516 B1**
(45) Veröffentlichungstag und Bekanntmachung des Hinweises auf die Patenterteilung: **09.11.2022**
(21) Anmeldenummer: 20196598.5
(22) Anmeldetag: 17.09.2020
(51) Int. Cl.: G01B 5/016, G01B 11/00, B23Q 17/20, B23Q 17/24

(54) **TASTKOPF**
PROBE
SONDE

(43) Veröffentlichungstag der Anmeldung: 23.03.2022
(73) Patentinhaber: Dr. Johannes Heidenhain GmbH, 83301 Traunreut (DE)
(72) Erfinder: SCHROLL, Thomas, 83352 Altenmarkt (DE)

(56) Entgegenhaltungen:
- EP-A1- 0 742 422
- DE-A1-102004 035 926

## Beschreibung

### BEZEICHNUNG DER ERFINDUNG

### GEBIET DER TECHNIK

Die Erfindung betrifft einen Tastkopf, der nach einem optischen Prinzip mit einer Lichtquelle und einem Fotodetektor arbeitet, gemäß dem Anspruch 1.

Ein Tastsystem umfasst in der Regel einen mobilen Tastkopf und ein stationäres Teil. Ein derartiger Tastkopf wird häufig in Form eines Tastschalters beziehungsweise eines schaltenden Tasters mit einem Auslenkelement eingesetzt, das bei einer Auslenkung aus einer Ruheposition ein Schaltsignal abgibt. Derartige Tastköpfe werden insbesondere zur Positionsbestimmung von Werkstücken verwendet. Vorzugsweise sind diese in materialbearbeitenden Maschinen, beispielsweise Werkzeugmaschinen, eingespannt. Unter der Ruheposition des Auslenkelements beziehungsweise eines Taststifts wird dabei eine Position verstanden, in welcher der Taststift keinen Kontakt mit dem anzutastenden Werkstück hat. Bei einem Kontakt des Taststifts mit dem Werkstück wird das Auslenkelement aus seiner Ruheposition, wenn auch nur minimal, ausgelenkt und es wird mittels eines geeigneten Wandlers ein elektrisches Signal erzeugt, wenn die Auslenkung eine vorgegebene Schwelle überschreitet. Das elektrische Signal wird dann häufig in ein Infrarot-Signal umgewandelt, so dass auf diese Weise eine berührungs- und kabellose Signalübertragung an das stationäre Teil des Tastsystems erreicht wird.

### STAND DER TECHNIK

In der EP 1 619 463 B1 der Anmelderin wird ein Tastkopf mit einem Auslenkelement beschrieben, welches als Halter für eine Linse, die zu einer optischen Vorrichtung gehört, dient. Eine Verlagerung des Auslenkelements wird mit Hilfe der optischen Vorrichtung festgestellt.

Aus der DE 35 08 396 C1 und der EP 0 742 422 A1 der Anmelderin ist eine Bauweise für einen Tastkopf bekannt, der Linsen aufweist, die offen in einer Ausnehmung eines Halters montiert sind.

### ZUSAMMENFASSUNG DER ERFINDUNG

Der Erfindung liegt die Aufgabe zu Grunde, einen Tastkopf der eingangs genannten Art zu schaffen, welcher robust und überaus zuverlässig insbesondere auch bei feuchtwarmer Umgebung arbeitet und zudem wirtschaftlich herstellbar ist.

Diese Aufgabe wird erfindungsgemäß durch die Merkmale des Anspruches 1 gelöst.

Gemäß der Erfindung umfasst der Tastkopf eine Baugruppe, die eine Lichtquelle und einen Fotodetektor aufweist. Weiterhin umfasst der Tastkopf ein Auslenkelement, welches einen Trägerkörper umfasst, an welchem eine Linse befestigt ist. Der Trägerkörper ist derart an der Baugruppe gelagert, dass bei Berührung des Auslenkelements eine Bewegung des Auslenkelements relativ zur Baugruppe ermöglicht ist. Die Linse befindet sich in einem Gehäuse, welche von einer Wandung begrenzt ist, während die Lichtquelle und der Fotodetektor außerhalb dieses Gehäuses angeordnet sind. Die Wandung des Gehäuses ist zumindest bereichsweise transparent ausgestaltet, so dass die Wandung für einen von der Lichtquelle emittierten Lichtstrahl durchlässig ist und durch die Linse hindurch in einer Ruheposition und/ oder in einer Auslenkposition zum Fotodetektor gelangt. Bei einer Verlagerung des auf den Fotodetektor auftreffendem Lichtstrahls ist vom Tastkopf ein Schaltsignal erzeugbar.

Eine Bewegung des Auslenkelements relativ zur Baugruppe erfolgt, wenn eine betragsmäßig kleine Kraft in das Auslenkelement eingeleitet wird. Dies erfolgt in der Praxis insbesondere häufig dann, wenn ein Taststift, welcher zum Auslenkelement gehört, einen abzutastenden Körper berührt.

Mit Vorteil besteht die Wandung des Gehäuses abschnittsweise (in einem Abschnitt) aus Metall und die Linse ist an diesem Abschnitt mit der Wandung verbunden.

In weiterer Ausgestaltung der Erfindung ist die Linse mit der Wandung durch eine Klebeverbindung verbunden.

Erfindungsgemäß ist das Gehäuse hermetisch dicht ausgestaltet, was insbesondere durch Klebeverbindungen der einzelnen Komponenten der Wandung erreicht werden kann.

Mit Vorteil ist zumindest ein transparent ausgestalteter Bereich der Wandung des Gehäuses als ein Glasplättchen ausgestaltet. Bei dieser Bauweise kann die Wandung zwei Glasplättchen umfassen, wobei die Glasplättchen dann bezogen auf die Achse beidseits der Linse angeordnet beziehungsweise fixiert sind. In weiterer Ausgestaltung der Erfindung ist das oder sind die Glasplättchen eben ausgestaltet.

In vorteilhafter Weise weist die Wandung eine Blende mit einem Loch auf, wobei das Loch von einem Glasplättchen verschlossen ist. Die Blende kann als separates Element in einen Trägerkörper, der Bestandteil des Auslenkelementes ist, montiert werden. Beispielsweise kann die Blende in einer Bohrung oder Ausnehmung des Trägerkörpers eingepresst oder eingeklebt sein.

Vorteilhafte Ausbildungen der Erfindung entnimmt man den abhängigen Ansprüchen.

Weitere Einzelheiten und Vorteile des erfindungsgemäßen Auslenkelements ergeben sich aus der nachfolgenden Beschreibung eines Ausführungsbeispiels anhand der beiliegenden Figuren.

### KURZE BESCHREIBUNG DER ZEICHNUNGEN

- Figur 1: ein Längsschnitt durch einen Tastkopf,
- Figur 2: einen Querschnitt durch den Tastkopf.

### BESCHREIBUNG DER AUSFÜHRUNGSFORMEN

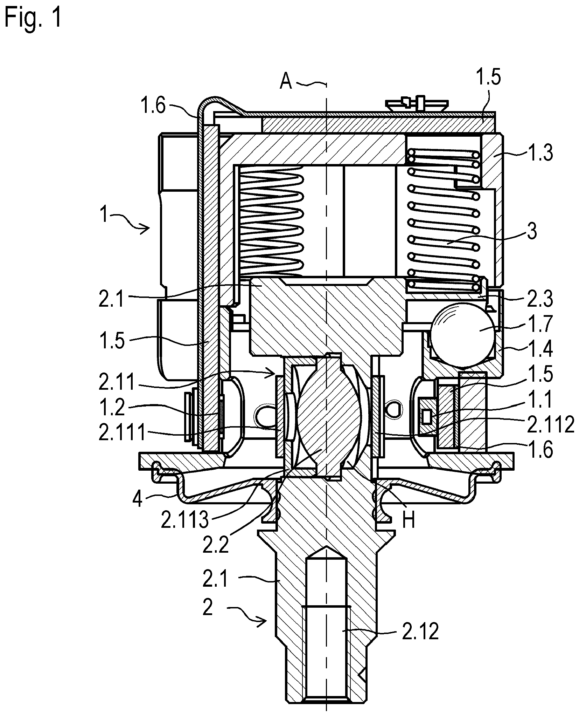

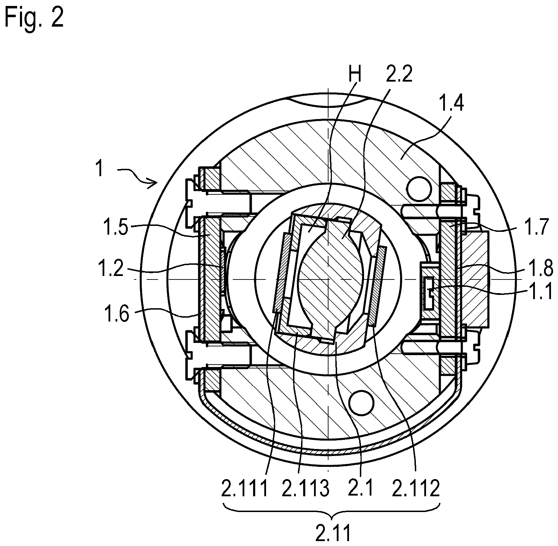

Die Figur 1 zeigt eine Ansicht des Tastkopfes in einer Ruheposition in einem Längsschnitt und die Figur 2 zeigt einen Querschnitt des Tastkopfs im Bereich von optischen Komponenten.

Der Tastkopf umfasst eine Baugruppe 1 und ein Auslenkelement 2.

Die Baugruppe 1 umfasst ein erstes Bauteil 1.3 sowie ein zweites Bauteil 1.4, welche eine mechanisch tragende Funktion aufweisen und aus Metall hergestellt sind. Die beiden Bauteile 1.3, 1.4 sind im Wesentlichen hohlzylindrisch ausgestaltet. Weiterhin weist die Baugruppe 1 eine Lichtquelle 1.1, etwa eine LED, und einen Fotodetektor 1.2, beispielsweise eine Differenz-Fotodiode beziehungsweise ein Differenz-Fotoelement auf. Die Lichtquelle 1.1 ist auf einer Leiterplatte 1.5 montiert, die wiederum mit einem Flexleiter 1.6 verbunden ist. Ebenso ist der Fotodetektor 1.2 mit der Leiterplatte 1.5 verbunden, die desgleichen mit dem Flexleiter 1.6 verbunden ist. Am zweiten Bauteil 1.4 ist ein Lagerteil zur Aufnahme von drei über den Umfang verteilte Kugeln 1.7 angeordnet. Üblicherweise ist der vorgestellte Tastkopf noch in einem topfförmigen Schutzgehäuse untergebracht, welches in den Figuren nicht dargestellt ist.

Aus dem unteren Bereich der Baugruppe 1 ragt ein Auslenkelement 2. Das Auslenkelement 2 weist einen Trägerkörper 2.1 auf. An das Auslenkelement 2 beziehungsweise an den Trägerkörper 2.1 kann ein in der Figur 1 nicht dargestellter Taststift insbesondere durch eine Schraubverbindung mit montiert werden. Hierfür ist im Trägerkörper 2.1 eine Gewindebohrung 2.12 eingearbeitet. Das Auslenkelement 2 verfügt im vorgestellten Ausführungsbeispiel über drei Paare von radial auskragenden Auflageflächen 2.3, die als Auflager dienen und mit den Kugeln 1.7 in Kontakt sind. Drei in axialer Richtung vorgespannte Federn 3 sorgen dafür, dass in der Ruheposition die Auflageflächen 2.3 mit den Kugeln 1.7 in Kontakt bleiben. Der Trägerkörper 2.1 ist auf diese Weise an der Baugruppe 1 so gelagert, dass bei Berührung des Auslenkelements 2 (aus einer Richtung mit einer Richtungskomponente senkrecht zu Achse A oder auch parallel zur Achse A) eine Bewegung des Auslenkelements 2 relativ zur Baugruppe 1 ermöglicht ist.

Weiterhin umfasst das Auslenkelement 2 eine Linse 2.2, die in einer senkrecht zur Achse A durchgängigen Bohrung des Trägerkörpers 2.1 eingeklebt ist, wobei der Außenbereich der Linse 2.2 an einem Absatz des Auslenkelements 2 anschlägt. In diese Bohrung ist eine Blende 2.113 befestigt, die hier als ein topfförmiger Metallkörper ausgestaltet ist, der ein Loch aufweist. Auf der Blende 2.113 wird ein erstes transparentes Glasplättchen 2.111, befestigt insbesondere derart geklebt, dass das Loch von dem Glasplättchen 2.111 verschlossen ist. Gegenüberliegend wird auf dem Trägerkörper 2.1 beziehungsweise über einem Loch im Trägerkörper 2.1 ein zweites transparentes Glasplättchen 2.112 fixiert, so dass demnach die Glasplättchen 2.111, 2.112 bezogen auf die Achse A beidseits der Linse 2.2 angeordnet sind. Im vorgestellten Ausführungsbeispiel sind die Glasplättchen 2.111, 2.112 eben, also nicht gekrümmt, ausgestaltet.

Die transparenten Glasplättchen 2.111, 2.112, die Blende 2.113 sowie entsprechende Bereiche des Trägerkörpers 2.1 (insbesondere die Innenwand der Bohrung) bilden eine Wandung 2.11 eines Gehäuses H, in dem sich die Linse 2.2 befindet. Die Wandung 2.11 des Gehäuses H besteht in demjenigen Abschnitt in dem die Linse 2.2 mit der Wandung 2.11 verbunden ist, aus Metall. Der betreffende Abschnitt befindet sich im vorgestellten Ausführungsbeispiel auf der Oberfläche des Trägerkörpers 2.1 und der Blende 2.113. Das Gehäuse H umschließt die Linse 2.2, so dass diese hermetisch dicht gegenüber der Umgebung angeordnet ist. Dies kann beispielsweise dadurch erreicht werden, dass die Blende 2.113 passgenau in der Bohrung des Trägerkörpers 2.1 montiert ist und zudem eine Klebeverbindung zwischen der Blende 2.113 und dem Trägerkörper 2.1 hergestellt ist. Somit ist das erste Glasplättchen 2.111 dicht mit der Blende 2.113 und das zweite Glasplättchen 2.112 dicht mit dem Trägerkörper 2.1 verklebt.

Ein Faltenbalg 4 ist an der Baugruppe 1 und am Auslenkelement 2, insbesondere am Trägerkörper 2.1 befestigt und soll dazu dienen gröbere Verschmutzungen vom Innenbereich des Tastkopfes fern zu halten insbesondere von den optischen Komponenten.

Eine Auslenkung des Auslenkelements 2 aus seiner Ruheposition wird durch die optisch wirkende Vorrichtung festgestellt. Die Lichtquelle 1.1 emittiert Licht, welches im Wesentlichen senkrecht zur Längsachse A des Auslenkelements 2 austritt. Das emittierte Licht durchdringt dann das Glasplättchen 2.112 gelangt zur Linse 2.2 und verlässt das Gehäuse H wieder durch das andere Glasplättchen 2.111. Das austretende Licht trifft danach auf einen Fotodetektor 1.2, welches im gezeigten Ausführungsbeispiel als Differenz-Fotoelement ausgestaltet ist.

Im Messbetrieb wird der Tastkopf beispielsweise innerhalb des Bearbeitungsraumes einer Werkzeugmaschine verfahren. Sobald der Taststift ein Hindernis - etwa ein zu vermessendes Werkstück - berührt, wird das gesamte Auslenkelement 2 ausgelenkt. Das heißt, dass entgegen der Kraft der Federn 3 zumindest einer der Auflageflächen 2.3 leicht abhebt und durch die Neigung der Längsachse A des Auslenkelements 2 auch die Linse 2.2 geneigt wird. Durch diese, wenn auch minimale Bewegung, erfährt der Lichtstrahl in der Linse 2.2 eine Ablenkung, welche vom Fotodetektor 1.2 detektiert wird. Ausgelöst durch ein entsprechendes Signal des Fotodetektors 1.2 sendet der Tastkopf ein Signal an ein stationäres Teil, welches an einem unbeweglichen Bauteil beispielsweise der Werkzeugmaschine fixiert ist. Von diesem stationären Teil wird das Signal an eine Elektronik, etwa in der Steuerung der Werkzeugmaschine weitergeleitet, wo die Position des Auslenkelements 2 festgehalten und gleichzeitig die Maschine gestoppt wird.

Häufig wird ein derartiger Tastkopf in einem Bearbeitungsraum einer Werkzeugmaschine eingesetzt. Beispielsweise wird dann automatisiert der Tastkopf aus einem Magazin der Werkzeugmaschine geholt und in den Bearbeitungsraum zum Bestimmen von Werkstückabmessungen gebracht. Im Bearbeitungsraum herrscht regelmäßig eine vergleichsweise hohe Luftfeuchtigkeit aufgrund der Verwendung von Kühl-Schmiermittel während der Bearbeitung.

Aufgrund der entstehenden Wärme im Bearbeitungsraum ist zudem die Lufttemperatur dort relativ hoch. Wenn nun der Tastkopf vom Magazin der Werkzeugmaschine in den Bearbeitungsraum überführt wird, können an den Flächen des Tastkopfes Kondensattröpfchen entstehen. Bei herkömmlichen Tastköpfen führte dies regelmäßig zu Ausfällen. Es hat sich nun gezeigt, dass durch die neue Bauweise, bei der (nur) die Linse 2.2 in dem Gehäuse H untergebracht ist, die Ausfallhäufigkeit entscheidend minimiert werden kann, obwohl die Wahrscheinlichkeit für eine Kondensatbildung auf den anderen optischen Komponenten des Tastkopfes im Vergleich zur herkömmlichen Bauweise des Tastkopfes unverändert geblieben ist.

## Patentansprüche

1. Tastkopf umfassend
- eine Baugruppe (1), die eine Lichtquelle (1.1) und einen Fotodetektor (1.2) aufweist, sowie
- ein Auslenkelement (2), welches einen Trägerkörper (2.1) umfasst, an welchem eine Linse (2.2) befestigt ist, wobei
der Trägerkörper (2.1) derart an der Baugruppe (1) gelagert ist, dass bei Berührung des Auslenkelements (2) eine Bewegung des Auslenkelements (2) relativ zur Baugruppe (1) ermöglicht ist
**dadurch gekennzeichnet, dass**
sich die Linse (2.2) in einem Gehäuse (H), welches von einer Wandung (2.11) begrenzt ist, befindet, während die Lichtquelle (1.1) und der Fotodetektor (1.2) außerhalb des Gehäuses (H) angeordnet sind, wobei
die Wandung (2.11) des Gehäuses (H) hermetisch dicht und zumindest bereichsweise transparent ausgestaltet ist, so dass die Wandung (2.11) für einen von der Lichtquelle (1.1) emittierten Lichtstrahl durchlässig ist und durch die Linse (2.2) hindurch zum Fotodetektor (1.2) gelangt.

2. Tastkopf gemäß dem Anspruch 1, wobei die Wandung (2.11) des Gehäuses (H) in einem Abschnitt aus Metall besteht und die Linse (2.2) an diesem Abschnitt mit der Wandung (2.11) verbunden ist.

3. Tastkopf gemäß dem Anspruch 2, wobei die Linse (2.2) mit der Wandung (2.11) durch eine Klebeverbindung verbunden ist.

4. Tastkopf gemäß einem der vorhergehenden Ansprüche, wobei zumindest ein transparent ausgestalteter Bereich der Wandung (2.11) des Gehäuses (H) als ein Glasplättchen (2.111, 2.112) ausgestaltet ist.

5. Tastkopf gemäß dem Anspruch 4, wobei die Wandung (2.11) zwei Glasplättchen (2.111, 2.112), die beidseits der Linse (2.2) angeordnet sind, umfasst.

6. Tastkopf gemäß einem der Ansprüche 4 oder 5, wobei das Glasplättchen (2.111, 2.112) eben ausgestaltet ist.

7. Tastkopf gemäß einem der vorhergehenden Ansprüche, wobei die Wandung (2.11) eine Blende (2.113) mit einem Loch aufweist, wobei das Loch von einem Glasplättchen (2.111) verschlossen ist.

## Claims

1. Probe head comprising
- an assembly (1) having a light source (1.1) and a photodetector (1.2), and
- a deflection element (2) comprising a carrier body (2.1), to which a lens (2.2) is attached, wherein
the carrier body (2.1) is supported on the assembly (1) in a manner such that, upon contact with the deflection element (2), a movement of the deflection element (2) in relation to the assembly (1) is enabled,
**characterized in that**
the lens (2.2) is located in a housing (H), which is delimited by a wall (2.11), while the light source (1.1) and the photodetector (1.2) are arranged outside the housing (H), wherein
the wall (2.11) of the housing (H) is designed such that it is hermetically sealed and transparent at least in part, with the result that the wall (2.11) is transmissive for a light beam emitted by the light source (1.1) and passes through the lens (2.2) to the photodetector (1.2).

2. Probe head according to Claim 1, wherein the wall (2.11) of the housing (H) in one portion consists of metal and the lens (2.2) is connected at this portion to the wall (2.11).

3. Probe head according to Claim 2, wherein the lens (2.2) is connected to the wall (2.11) by way of an adhesive bond.

4. Probe head according to any of the preceding claims, wherein at least one transparently designed region of the wall (2.11) of the housing (H) is designed in the form of a glass plate (2.111, 2.112).

5. Probe head according to Claim 4, wherein the wall (2.11) comprises two glass plates (2.111, 2.112), which are arranged on both sides of the lens (2.2).

6. Probe head according to either of Claims 4 and 5, wherein the glass plate (2.111, 2.112) has a planar design.

7. Probe head according to any of the preceding claims, wherein the wall (2.11) has a stop (2.113) with a hole, wherein the hole is closed by a glass plate (2.111).

## Revendications

1. Sonde comprenant
- un ensemble (1) comportant une source de lumière (1.1) et un photodétecteur (1.2), et
- un élément de déviation (2) qui comprend un corps de support (2.1) auquel une lentille (2.2) est fixée,
le corps de support (2.1) étant monté sur l'ensemble (1) de façon à permettre le mouvement de l'élément de déviation (2) par rapport à l'ensemble (1) en cas de contact de l'élément de déviation (2),
**caractérisée en ce que**
la lentille (2.2) est située dans un boîtier (H) qui est délimité par une paroi (2.11), tandis que la source de lumière (1.1) et le photodétecteur (1.2) sont disposés à l'extérieur du boîtier (H),
la paroi (2.11) du boîtier (H) étant conçue pour être hermétiquement étanche et transparente au moins par endroits de sorte que la paroi (2.11) soit transparente à un faisceau de lumière qui est émis par la source de lumière (1.1) et parvient au photodétecteur (1.2) en passant à travers la lentille (2.2).

2. Sonde selon la revendication 1, la paroi (2.11) du boîtier (H) étant en métal dans une portion et la lentille (2.2) étant reliée à la paroi (2.11) au niveau de cette portion.

3. Sonde selon la revendication 2, la lentille (2.2) étant reliée à la paroi (2.11) par une liaison adhésive.

4. Sonde selon l'une des revendications précédentes, au moins une zone de conception transparente de la paroi (2.11) du boîtier (H) étant conçue sous la forme d'une plaquette de verre (2.111, 2.112).

5. Sonde selon la revendication 4, la paroi (2.11) comprenant deux plaquettes de verre (2.111, 2.112) qui sont disposées de part et d'autre de la lentille (2.2).

6. Sonde selon l'une des revendications 4 ou 5, la plaquette de verre (2.111, 2.112) étant conçue pour être plane.

7. Sonde selon l'une des revendications précédentes, la paroi (2.11) comportant un écran (2.113) pourvu d'un trou, le trou étant obturé par une plaquette de verre (2.111).
